# EUROPEAN PATENT SPECIFICATION

(11) **EP 3 209 154 B1**
(45) Date of publication and mention of the grant of the patent: **04.09.2019**
(21) Application number: 15851661.7
(22) Date of filing: 22.10.2015
(51) Int. Cl.: A42B 3/04, G02C 7/00

(54) **SAFETY GEAR FOR CYCLING**
SCHUTZAUSRÜSTUNG FÜR FAHRRADFAHRER
ÉQUIPEMENT DE SÉCURITÉ POUR CYCLISME

(30) Priority: 25.10.2014 US 201462068635 P; 31.10.2014 US 201462073020 P; 01.11.2014 US 201462073959 P
(43) Date of publication of application: 30.08.2017
(73) Proprietor: Cycling Zone Company Limited, Hong Kong (CN)
(72) Inventor: LAU, Koon Hang, Hong Kong (CN)
(74) Representative: de Arpe Fernandez, Manuel
(86) International application number: PCT/CN2015/092570
(87) International publication number: WO 2016/062262

(56) References cited:
- EP-A1- 2 320 263
- CN-A- 103 099 372
- CN-Y- 2 181 821
- GB-A- 2 338 077
- US-A- 4 559 516
- US-A- 6 157 298
- US-A1- 2002 154 008
- US-A1- 2005 265 015
- US-A1- 2007 147 027
- US-A1- 2012 157 243
- US-A1- 2014 169 011
- US-B1- 7 649 700

## Description

### Field of the Invention:

The present invention generally relates to a cycling equipment. More particularly, the present invention relates to a safety gear for cycling (SGC).

### Background:

Bicycle is becoming more and more common around the world nowadays that many people use it as the main mode of transportation for daily commuting because of its low carbon footprint. However, there are also an increasing number of serious and even fatal road accidents involving the road cyclists. One of the key reasons is due to the insufficient communication of the cyclists' directional intention with the passing vehicles during road cycling, such as slowing down, turning left or right. Another reason is due to the limited freedom of rotation of human's eyes and head which causes difficulties for the cyclists to look back to see the oncoming traffic behind before changing lane or changing the position in a lane. Bicycle mirror is invented to help the cyclists to look rearward, however it increases surface area and drag, adds extra weight and the blind spot could not be eliminated.

CN2412143 discloses a spectacle equipping with warning light, which comprises a spectacle frame, and the spectacle frame is equipped with a lighting lamp, a left turning lamp and a right turning lamp connected to a power supply via a conductive wire. A battery box, located on the handle of a bicycle, comprises switches for the lighting lamp, the left turning lamp and the right turning lamp. For example, when a cyclist needs turn left, he can switch on the left turning lamp by pressing the corresponding switch for alerting other road user. This invention can provide more protection for the cyclist when he rides at night. However, the cyclist may fail to focus on the traffic and cycling when turning on the corresponding signals though pressing the switches on the battery box that may even lead to an accident. In addition, the cyclist has difficulty to see the traffic situation behind him to decide whether he is able to change the direction or not, following with switching on the corresponding signal lamp.

US 6157298, discloses a one or two-piece safety helmet to be used while biking, skating, rollerblading or while performing other recreational activities using non-motorized vehicles, wherein in one configuration, the helmet is comprised of an inner and outer shell secured together via VELCRO TM or snaps, wherein both shells meet appropriate helmet safety standards. The helmet features a chin-strap, directional signals, a brake light, an AM/FM radio, and two-way communication capabilities.

US2014/16901 discloses a bicycle direction light control system which may be installed on a bicycle and a head fitting. The system includes a sensing module and a direction light module. The sensing module can be installed on the head fitting for sensing the movement speed, turning angle and turning direction of the user's head. The direction light module is installed on the bicycle and faces towards the rear side of the bicycle.

Consequently, there is an unmet need to have a cycling equipment capable of facilitating a cyclist to look backward, and generating signals to other road users in a simple and safe way when the cyclist intends to change lane or direction.

### Summary of the Invention:

An aspect of the present invention is to provide a safety gear for cycling.

According to an embodiment of the presently claimed invention, a safety gear for cycling comprises: a brake signal component; a brake signal component circuit, connected to the brake signal component, comprising a brake signal switch, wherein the brake signal switch senses pitch head movement of a cyclist to control on and off of the brake signal component.

According to an embodiment of the presently claimed invention, a safety gear for cycling comprises: a brake signal component; a brake signal component circuit, connected to the brake signal component, comprising a brake signal switch, wherein the brake signal switch senses a pitch head movement of a cyclist to control on and off of the brake signal component; a left turn signal component and a right turn signal component; a turn signal component circuit, connected to the left turn signal component and the right turn signal component, comprising at least one turn signal switch, wherein the turn signal switch senses a roll head movement of the cyclist to control on and off of the left turn signal component and the right turn signal component.

According to an embodiment not forming part of the claimed invention, a safety eyewear for cycling comprises: a cycling eyewear comprising refractive portions of a lens and a non-refractive portion of the lens, wherein the refractive portions are located at a left and a right ends of the non-refractive portion; a left turn signal component and a right turn signal component; a brake signal component; a brake signal component circuit, connected to the brake signal component, comprising a brake signal switch, wherein the brake signal switch senses a pitch head movement of a cyclist to control on and off of the brake signal component; a turn signal component circuit, connected to the left turn signal component and the right turn signal component, comprising at least one turn signal switch, wherein the turn signal switch senses a roll head movement of the cyclist to control on and off of the left turn signal component and the right turn signal component.

Preferably, the brake signal switch is a tilt sensor, gravity sensor or a gyro sensor.

Preferably, the pitch head movement of the cyclist is a downward or an upward angular movement of head.

Preferably, the brake signal switch is a tilt sensor, and the brake signal component circuit is configured that when the tilt sensor is titled to a side at a degree about the pitch axis relative to gravity, the brake signal component circuit is closed and the brake signal component is on.

Preferably, the brake signal switch is a gravity sensor, and the brake signal component circuit is configured that when the tilt sensor is titled to a side at a degree about the pitch axis relative to gravity, the brake signal component circuit is closed and the brake signal component is on.

Preferably, the brake signal switch is a gyro sensor, and the brake signal component circuit is configured that when the gyro sensor senses a rate of angular change due to the pitch head movement in a positive or negative direction, the brake signal component is on or off respectively.

Preferably, the brake signal switch is gyro sensor, and the brake signal component circuit is configured that when the gyro sensor senses a continuous positive and then negative rate of angular change due to the pitch head movement within a period of time, all of the signal components are turned off.

Preferably, the safety gear for cycling further comprises a brake signal alerting device to alert the cyclist when the brake signal component is on.

Preferably, the turn signal switch is a tilt sensor, or gravity sensor.

Preferably, the roll head movement of the cyclist is head rolling to the left side or right side.

Preferably, the turn signal switch comprises a tilt sensor, and the turn signal component circuit is configured that when the tilt sensor is titled to a side over a preset degree about roll axis relative to gravity when the bicycle is going straight, or relative to the resultant vector of force by gravity and centrifugal force when the bicycle is turning, the turn signal component circuit is closed, and the left turn signal component, or the right turn signal component is on.

Preferably, the safety gear for cycling further comprises a turn signal alerting device to alert the cyclist when the left turn signal component or the right turn signal component is on.

Preferably, the safety gear for cycling further comprises a controller circuit connected to the brake signal component circuit, and turn signal component circuit, wherein the controller circuit is configured to control signal sequence, priority and time delay among the brake signal component, the left turn signal component, and the right turn signal component.

The SGC is easy to wear and take off. There is no installation of any device required on the bicycle. The SGC allows the cyclist to focus on looking out traffic and cycling. When the cyclist intends to change lane or direction, or slowing down, the SGC automatically turns on the corresponding signals including brake, left turn and right turn signals, so that the other road users know about the cyclist's intention. This configuration allows the cyclist to turn on or off the brake and turn signal, while the cyclist keeps holding the brake without sacrificing braking power such that the cyclist can hold both of his hands on the handle bar throughout a whole journey to maintain balance and control of bicycle.

### Brief Description of the Drawings:

Embodiments of the present invention are described in more detail hereinafter with reference to the drawings, in which:
Figure **1** illustrates the electric circuit with the tilt sensor work as a switch to control the on/off of the LED according to an embodiment of the presently claimed invention;
Figure **2A** illustrates the side view of the user's head that he keeps his head down to control the LED signal to be turned off according to an embodiment of the presently claimed invention;
Figure **2B** illustrates the side view of the user's head that he tilts his head up about pitch axis to control the LED signal to be turned on according to an embodiment of the presently claimed invention;
Figure **3** illustrates the difference of the cyclists' natural head movement when (A) accelerating and (B) decelerating respectively.
Figure **4A** illustrates the front view of the user's head that he keeps his head straight to control the LED signal be turned off according to an embodiment of the presently claimed invention;
Figure **4B** illustrates the front view of the user's head that he tilts his head about roll axis to one side to control the LED signal to be turned on according to an embodiment of the presently claimed invention;
Figure **5** illustrates the top view of the maximum freedom of horizontal rotation of human's eyes and head, and the maximum horizontal viewing area;
Figure **6** illustrates the top view of a road situation that the position of a vehicle is beyond the cyclist's maximum viewing area;
Figure **7** illustrates the front view of the location of the refractive portions on the left and right lens on the gear not forming part of the presently claimed invention;
Figure **8A** illustrates the top view of the refracted light source horizontally from the right side through the refractive lens and non-refractive lens and being direct to the user's right eye's field of view according to an embodiment not forming part of the presently claimed invention;
Figure **8B** illustrates the magnified top view of circled area of the figure **8A** that the refracted light source horizontally from the right side through the refractive lens and non-refractive lens and being directed to the user's right eye's field of view according to an embodiment not forming part of the presently claimed invention;
Figure **9A** illustrates the top view of the right eye of the user's horizontal field of view with a non-refractive lens;
Figure **9B** illustrates the top view of the user's horizontal field of view with refractive lens such that the angle of the horizontal field of view is widened according to an embodiment not forming part of the presently claimed invention;
Figure **10** illustrates the top view of the surface of the lens that transit from the non-refractive lens to the refractive lens with decreasing optical power towards the right edge of the lens according to an embodiment not forming part of the presently claimed invention;
Figure **11A** illustrates the top view of a safety eyewear for cycling of Example 1;
Figure **11B** illustrates the front view of a safety eyewear for cycling of Example 1; and
Figure **12** illustrates the top view of a safety gear for cycling of Example 2.

### Detailed Description of Preferred Embodiments:

In the following description, a safety gear for cycling, and the corresponding embodiments are set forth as preferred examples. It will be apparent to those skilled in the art that modifications, including additions and/or substitutions, may be made without departing from the scope of the invention, as defined by the claims. Specific details may be omitted so as not to obscure the invention; however, the disclosure is written to enable one skilled in the art to practice the teachings herein without undue experimentation.

This present invention is a combination of cycling gear, brake light and turn signal light. It is designed for cyclists to integrate the head protective features of the cycling gear, in addition with light signal includes brake light and turn signal light.

### Brake Light

The purpose of the brake light is to let the other road users to know about the cyclist's intention, such as when slowing down or stopping.

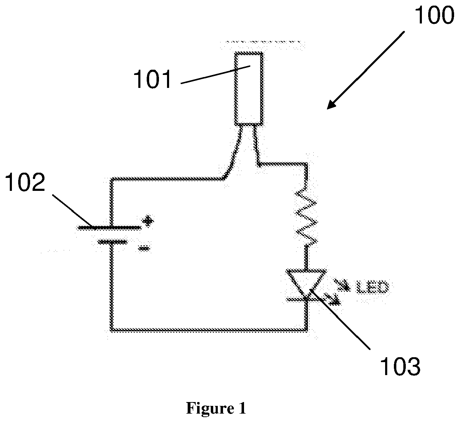

The operation of the brake light is based on a signal component circuit **100** that consists of a brake signal switch **101,** DC battery **102** and brake signal component **103** as shown in Figure **1****,** which is incorporated or attached into the headwear that wrap around or attached to the user's head, such as hat, headwear, helmet or eyewear.

The brake signal switch **101** can be a tilt sensor, gravity sensor, gyro sensor, or any other method to sense the rotary motion of the upward and downward head movement.

The brake signal component **103** should be designed in a manner that allows other road users to be visible from the side and behind of the cyclist. Preferably, the brake signal component is a brake signal light such as a light emitting diode (LED).

In the case of using tilt sensor, the design logic is to sense the downward and upward pitch head position of the cyclists when one is wearing the SGC.

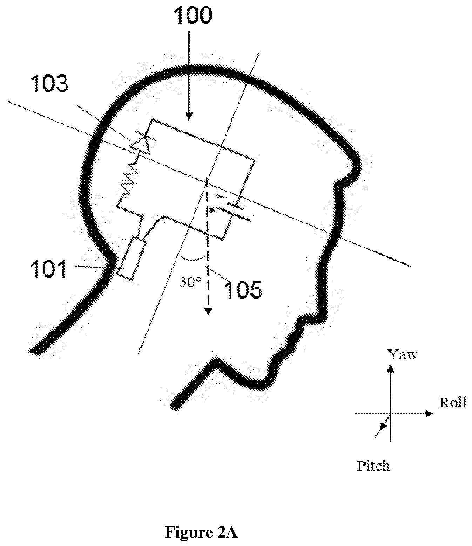

The tilt sensor works as the brake signal switch **101** such that when it is tilt downward about pitch axis over a certain degree (30°) relative to gravity **105,** the switch **101** is opened, and the circuit **100** is opened and brake signal component **103** is off as shown in Figure **2A****.**

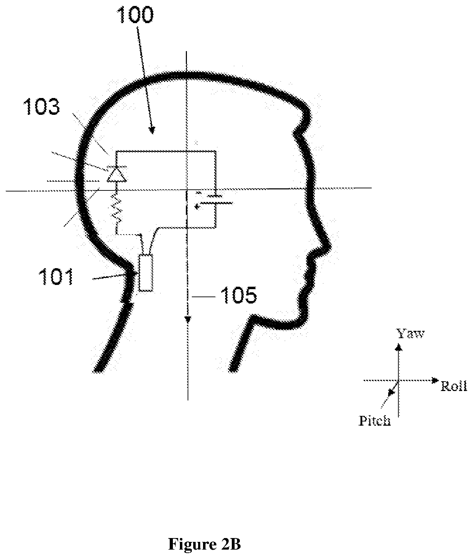

When the cyclist pitch the head up to align with gravity **105,** the tilt sensor switch **101** is closed, the signal component circuit **100** is closed and the brake signal component **103** is on as shown in Figure **2B****.**

The gravity sensor works as a switch such that when it is tilt downward about pitch axis over a certain degree (30°) relative to gravity **105,** the switch is opened, and the circuit is opened and signal component is off. The corresponding circuit set-up is similar to that as shown in Figure **2A****.**

When the cyclist pitch the head up to align with gravity, the gravity sensor switch is closed, the signal component circuit is closed and the brake light is on. The corresponding circuit set-up is similar to that as shown in Figure **2B****.**

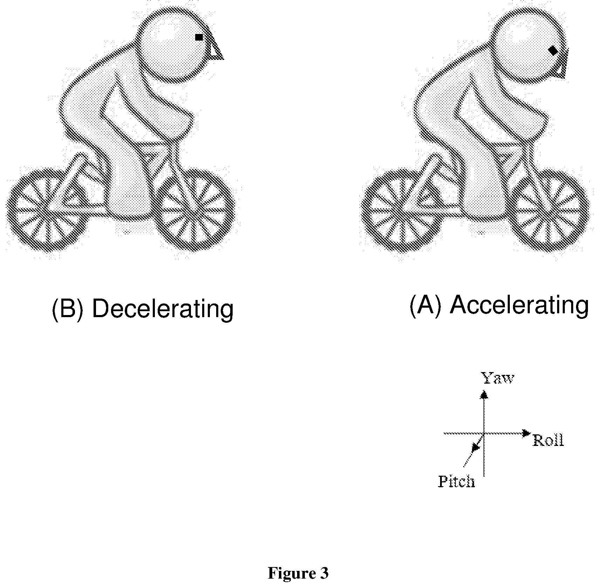

The sensor logic matches the normal movement of cyclists that when they are applying force to go forward and accelerating, the natural body movement would cause the head to pitch down as shown in Figure **3A****.** When the cyclist is slowing down or stopping, the natural body movement would cause the head to pitch up for certain degree as shown in Figure **3B****.** Such that when accelerating, the brake light is off. When decelerating, the brake light is on.

The brake light component could be flashing or no flash. It can be any color or red.

The tilt angle could be adjusted depending on the cyclist's natural instinctive movement, when he/she intended to slow down. Users can pitch the head upward to turn on the brake light before they really want to slow the bicycle down.

In the case of using the gyro sensor, it senses the upward or downward head angular movement about pitch axis. Such that when the cyclist is pitching the head up (90°/sec), the brake light is on. When the cyclist is pitching the head down (90°/sec) during acceleration, the brake light is off.

When the brake signal is on, an alerting device is incorporated to the SGC to alert the user themselves that the signal is activated, so that error signal could be prevented. The alerting device could be and not only limited to vibrator, speaker or signal light which is / are noticeable to the user.

The left turn signal, right turn signal and brake signal could be connected to an electronic circuit with a controller to control the signals' sequence, priority and time delay, so that signal error could be prevented. One of the sequence to avoid accidentally off the brake signal is that during the brake signal is turned on, user may want to change lane and turn on the turn signal too. The head movement of the user may accidentally pitch down and roll their head to a side to turn on the turn signal. In this situation, the brake light is accidentally turned off. To prevent this happen, the brake signal could have a 2 seconds delay before turning off. In case the turn signal is turned on within 2 seconds, the turn signal could be turned on, and brake signal would be kept turned on. So in case the users head pitch downwards to turn on the turn signal too, the brake signal would not be turned off, until the turn signal is off.

In the case of using the Gyro Sensor, it senses the rate of angular change. When the user pitches his head up slowly (5°/sec), the brake light would not be turned on. Signal error could be prevented due to the bicycle is going up-slope or down-slope, with relatively slow angular change. When the user pitches his head up quickly (90°/sec), the brake light will be turned on. The sensitivity and the rate of angular change could be set up on the control circuit, so that the brake light will only turned on if the head movement is quick enough at certain degree / sec.

If the SGC is connected with a gyro sensor, the downward and upward pitch head movement allows an extra control feature. Let say if the user pitch downward and upward instantly like nodding their head for 10° down and 10° up within 1 seconds, all the signal light will be turned off.

Sensors' angular position on the SGC could be adjusted according to the different types of bicycle design, such as road bike or mountain bike. So that the rotational axis of the sensor could be matching the head position when the user riding in different position of different types of bike. In the other words, the sensor should be aligned with the cyclists head rotational axis, so that the rotational movement could be sensed more accurately.

### Turn signal light

The purpose of the turn signal light is to let the other road users to know about the cyclist's directional intention, such as before or when changing lane or changing direction.

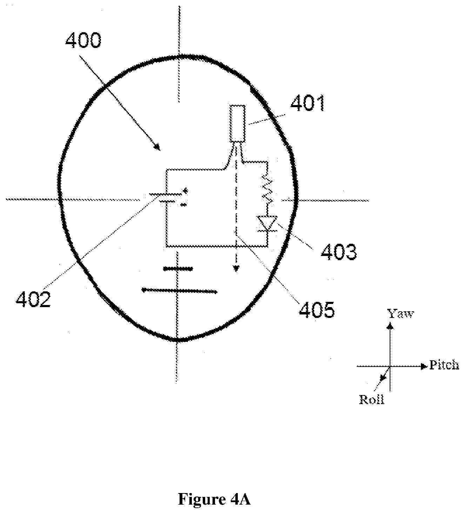

The operation of the turn signal light is based on a turn signal component circuit **400** which consists of a turn signal switch **401,** DC battery **402** and turn signal component **403** as shown in Figure **4A****,** which is incorporated into a gear to be worn on the user's head, such as hat, headwear, helmet or eyewear. The signal should be attached to a suitable position on the gear so that it allows other road users to be visible from the side and behind of the cyclist.

The switch could be a tilt sensor, gravity sensor, or any other method to sense the head tilting movement about roll axis. The turn signal component should be designed in a manner that allows other road users to be visible from the side and behind of the cyclist. The turn signal component can comprise a left turn signal component such as a left turn signal light and a right turn signal component such as a right turn signal light. The left and right turn signal lights could be separated or connected with each other, are identical in terms of technical design, but the light direction and sensor direction are mirroring to each other. Each of them is responsible for either the left or right turn signal light.

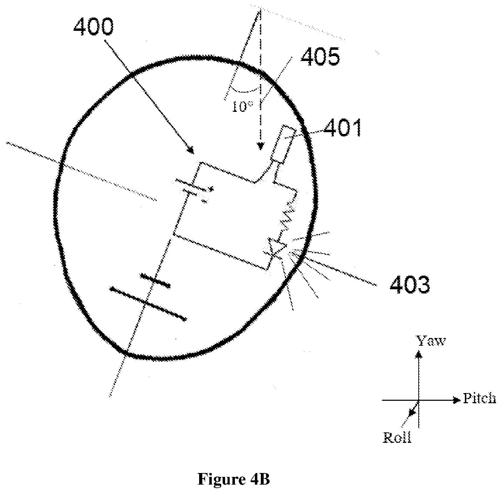

The tilt sensor works as the turn signal switch **401** such that when it is tilted to the side over 10° about roll axis relative to gravity **405** when the bicycle is going straight, or relative to the resultant vector of force by gravity and centrifugal force when the bicycle is turning, the switch **401** is closed and the circuit **400** is closed and signal component **403** is on. The tilt angle corresponds to the user's head roll movement when one is wearing the gear, so that when the user keeps the head straight, the turn signal circuit **400** is opened and the signal light **403** is turned off as shown in Figure **4A****.** When the user rolls the head to one side for 10°, the turn signal circuit **400** is closed and the signal light **403** is turned on as shown in Figure **4B****.**

The turn signal light could be flashing or without flash. It can be any color or yellow.

The tilt angle could be adjusted depending on the cyclist's normal instinctive movement, when one intends to change lane and look back to scan traffic rearward. Users can roll the head to turn on the signal light before they want to look back to scan the traffic rearward.

In order to avoid signal light from turning off due to the cyclists' normal practice that they may roll and turn their head forward and backward for several times to check the traffic situation in front and at the back respectively, a set time delay device could be incorporated to the circuit to delay the signal light shut off time after it is on, for let say 10 seconds.

When the turn signal is on, an alerting device is incorporated to the SGC to alert the user themselves that the signal is activated, so that error signal could be prevented. The alerting device could be and not only limited to vibrator, speaker or signal light which is/are noticeable to the user. The alerting devices could be separated for indicating whether the left signal or the right signal is activated correspondingly.

The left turn signal and right turn signal could be connected to an electronic circuit with a controller, so that either one signal is turned on at a time.

When either left turn signal or right turn signal is on, brake signal is operating independently so that users can turn on the brake signal while turn signal is on, or turn off the brake signal while turn signal is on.

A time limit could be set up so that the turn signal will be automatically turned off after certain period of time, let say 10 seconds.

If the turn signal is turned on (let say left) and the left signal is triggered again, the left signal will be remained on, but the automatically turned off time will be recount.

The left turn signal, right turn signal and brake signal could be connected to an electronic circuit with a controller to control the signals' sequence, priority and time delay, so that signal error could be prevented. One of the sequence to avoid accidentally off the brake signal is that during the brake signal is turned on, user may want to change lane and turn on the turn signal too. The head movement of the user may accidentally pitch down and roll their head to a side to turn on the turn signal. In this situation, the brake light is accidentally turned off. To prevent this happen, the brake signal could have a 2 seconds delay before turning off. In case the turn signal is turned on within 2 seconds, the turn signal could be turned on, and brake signal would be kept turned on. So in case the users head pitch downwards to turn on the turn signal too, the brake signal would not be turned off, until the turn signal is off.

If the SGC is connected with a gyro sensor, the downward and upward pitch head movement allows an extra control feature. Let say if the user pitch downward and upward instantly like nodding their head for 10° down and 10° up within 1 seconds, all the signal light will be turned off.

Sensors' angular position on the SGC could be adjusted according to the different type of bicycle, such as road bike or mountain bike. So that the rotational axis of the sensor could be matching the head position when the user riding in different position of different types of bike. In the other words, the sensor should be aligned with the cyclists head rotational axis, so that the rotational movement could be sensed more accurately.

### Horizontal side-to-back view refractive lens (Not forming part of the claimed invention)

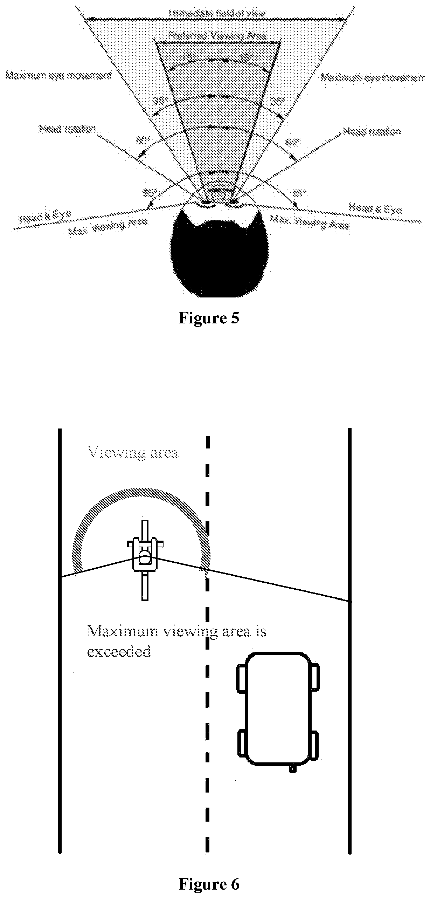

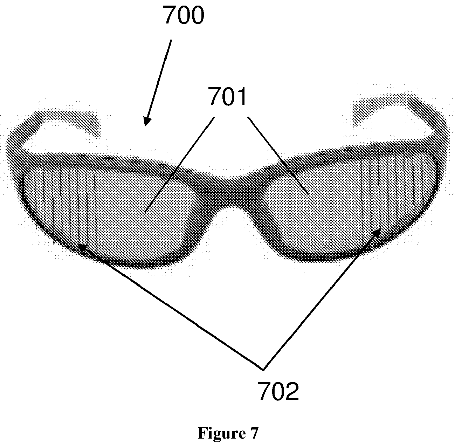

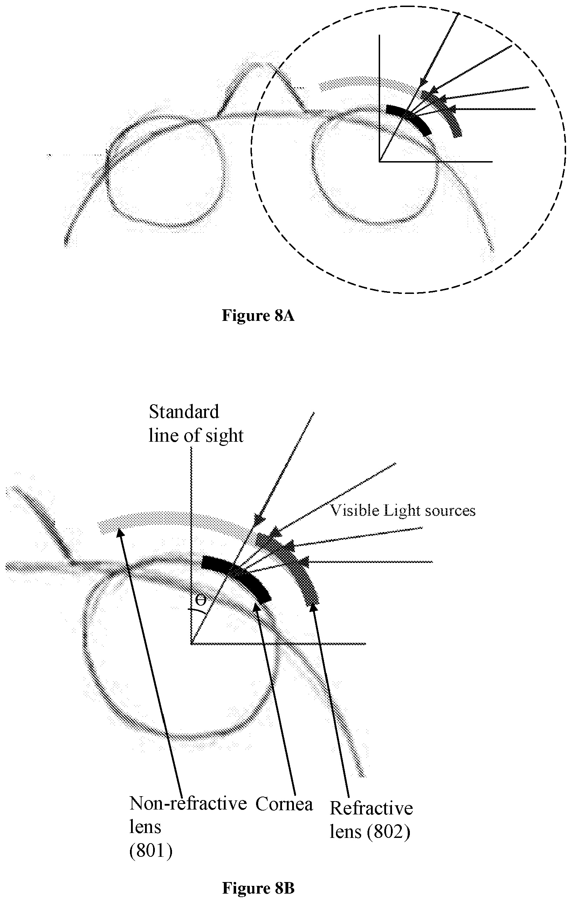

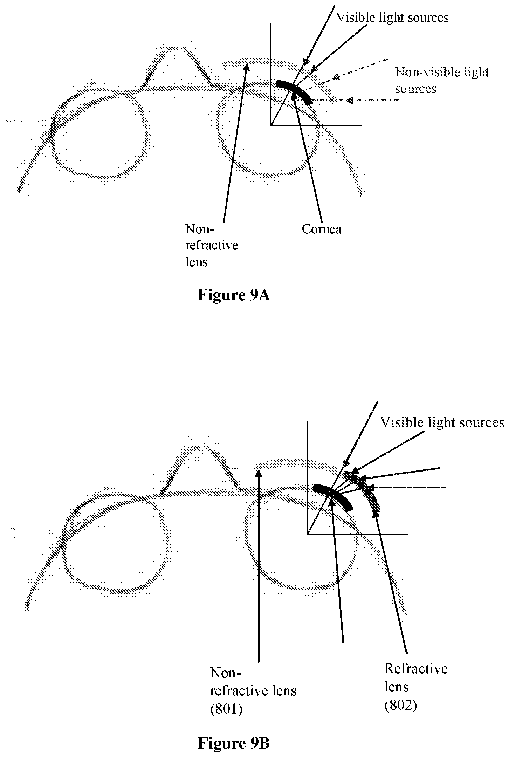

Freedom of rotation of human's eyes and head are limited as shown in Figure **5****,** which cause difficulties for the cyclist to look back to check the oncoming traffic behind before changing lane or changing the position in a lane as shown in Figure 6. The operation of the horizontal side-to-back view refractive lens is based on refractive portions **702** of a lens such as concave lens or Fresnel lens or any other methods that is incorporated to both left and right ends of the non-refractive portion **701** of the lens on the eyewear **700** as shown in Figure **7****,** which refract the light source horizontally from the side to back and direct it to the user's viewing area as shown in Figures **8A** and **8B****.** As shown in Figure **8****,** the eyewear comprises a non-refractive lens (non-refractive portion) **801** and a refractive lens (refractive portion) **802,** and the refractive lens **802** is located at the far end of the non-refractive lens **801.** User can turn one of the eyes to either left or right edge of the gear where the horizontal side-to-back view refractive lens is located, then the lens will redirect light source from the side at or more than 90° measured from the standard line of sight. The side-to-back view is normally beyond the viewing area of human eye as shown in Figure **9A****.** Hence by wearing the SGC eyewear, the angle of horizontal field of view is widened, say more than 90° measured from the standard line of sight as shown in Figure **9B****.**

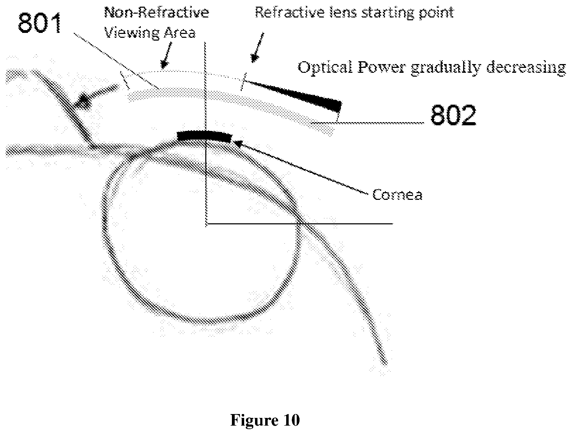

The widened horizontal field of view helps the users to decrease the angular body movement towards the side in order to scan oncoming traffic behind before changing lane. The refractive angle depends on the optical power of the lens. The optical power of the refractive lens **802** could be changed gradually from 0 to -50 Dioptre or in stages to provide a smooth transition from lower refraction angle to the largest refraction angle at the far end of the lens **801** as shown in Figure **10****.** The gradient of the optical power change could be adjusted for different design and usage.

The refractive lens transition can be started depends on different design, usage and the non-refractive viewing area required. The refractive lens could also be rotated by certain angle to create a tilted refraction to facilitate different riding position, such as for road bike riders who have to lower the head due to the bicycle frame design.

### Multi-function eyewear

When the cyclist is riding a bicycle to go forward normally, one can look forward through the non-refractive lens, without signal lights turned on. When the cyclist want to change lane, one may roll and turn the head to one side and look back to scan traffic rearward by the horizontal side-to-back view refractive lens. At the same time the signal light is activated due to the side tilted switch about roll axis is closed, so the flashing yellow turn signal light is turned on to alert the other road users about the cyclist's intention of changing direction. In case the cyclist needs to slow the bicycle down, one can activate the brake light at the same time by pitching the head up, when the turn signal light is still on.

### Example 1

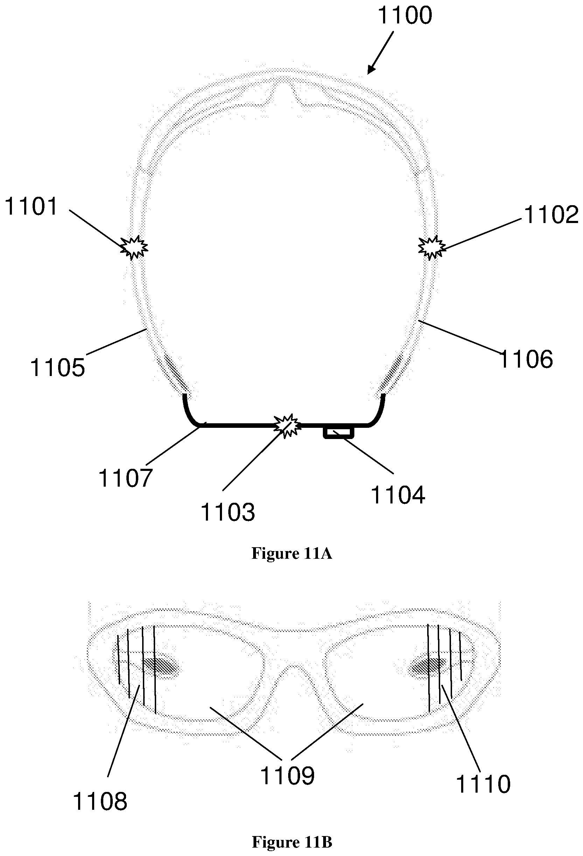

An example of the safety eyewear for cycling according to the present invention is provided as shown in Figures. **11A** and **11B****.** The safety eyewear for cycling comprises a cycling eyewear **1100,** a left signal light **1101,** a right signal light **1102,** a brake signal light **1103,** and a controller assembly **1104.** The left signal light **1101** and the right signal light **1102** are located on a left frame **1105** and a right frame **1106** of the cycling eyewear **1100** respectively. The brake signal light **1103** and the controller assembly **1104** are located on a frame connector **1107.** The controller assembly **1104** is connected with the left signal light **1101,** the right signal light **1102,** and the brake signal light **1103** through electrical wires to control their on/off. The controller assembly **1104** comprises a brake signal component circuit and a gyro sensor to control the on/off of the brake signal light **1103,** a turn signal component circuit and a tilt sensor to control the on/off of both of the left signal light **1101** and the right signal light **1102,** and a battery to provide electrical power for the corresponding signal lights and circuits. The cycling eyewear **1100** comprises a right refractive lens **1108** located at the far right end portion of the non-refractive lens **1109,** and a left refractive lens **1110** located at the far left end portion of the non-refractive lens **1109.**

### Example 2

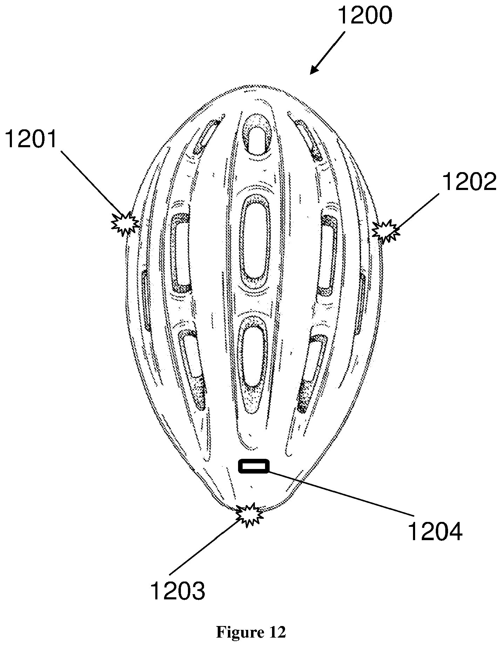

An example of the safety gear for cycling according to the present invention is provided as shown in Figure **12****.** The safety gear for cycling comprises a cycling helmet **1200,** a left signal light **1201,** a right signal light **1202,** a brake signal light **1203,** and a controller assembly **1204.** The left signal light **1201** and the right signal light **1202** are located at a left and a right sides of the cycling helmet **1200** respectively. The brake signal light **1203** and the controller assembly **1204** are located at back side of the cycling helmet **1200.** The controller assembly **1204** is connected with the left signal light **1201,** the right signal light **1202,** and the brake signal light **1203** through electrical wires to control their on/off. The controller assembly **1204** comprises a brake signal component circuit and a gyro sensor to control the on/off of the brake signal light **1203,** a turn signal component circuit and a tilt sensor to control the on/off of both of the left signal light **1201** and the right signal light **1202,** and a battery to provide electrical power for the corresponding signal lights and circuits.

The foregoing description of the present invention has been provided for the purposes of illustration and description. It is not intended to be exhaustive or to limit the invention to the precise forms disclosed. Many modifications and variations will be apparent to the practitioner skilled in the art.

The embodiments were chosen and described in order to best explain the principles of the invention and its practical application, thereby enabling others skilled in the art to understand the invention for various embodiments and with various modifications that are suited to the particular use contemplated. It is intended that the
scope of the invention be defined by the following claims.

## Claims

1. A safety gear for cycling, comprising:
a brake signal component (103);
a brake signal component circuit (100),
wherein said brake signal component circuit (100) is connected to the brake signal component (103) and comprises a brake signal switch (101), and
wherein the brake signal switch (101) senses a head pitch movement of a cyclist to control on and off of the brake signal component (103).

2. The safety gear for cycling of claim 1, further comprising:
a left turn signal component and a right turn signal component;
a turn signal component circuit (400),
wherein said turn signal component circuit (400) is connected to the left turn signal component and the right turn signal component and comprises at least one turn signal switch (401), and
wherein the turn signal switch (401) senses a head roll movement of the cyclist to control on and off of the left turn signal component and the right turn signal component.

3. The safety gear for cycling of claim 2, wherein the turn signal switch (401) is a tilt sensor, or gravity sensor.

4. The safety gear for cycling of claim 2, wherein the turn signal switch (401) comprises a tilt sensor, and the turn signal component circuit (400) is configured that when the tilt sensor is titled to a side in a degree or above relative to gravity, the turn signal component circuit (400) is closed, and the left turn signal component or the right turn signal component is on.

5. The safety gear for cycling of claim 4, wherein when the tilt sensor is titled to the left side in 10° or above about roll axis relative to gravity, or a resultant component by gravity, the left signal component is on, and when the tilt sensor is titled to the right side in 10° or above about roll axis relative to gravity, the right signal component is on.

6. The safety gear for cycling of claim 1 or 2, wherein the brake signal switch (101) is a tilt sensor, a gyro sensor, or gravity sensor.

7. The safety gear for cycling of claim 1 or 2, wherein the brake signal switch (101) is a tilt sensor, and the brake signal component circuit (100) is configured that when the tilt sensor is titled to a side about pitch axis at a degree relative to gravity, the brake signal component circuit (100) is closed and the brake signal component (103) is on.

8. The safety gear for cycling of claim 1 or 2, wherein the brake signal switch (101) is a gyro sensor, and the brake signal component circuit (100) is configured that when the gyro sensor senses a rate of angular change due to the head pitch movement in a positive or negative direction, the brake signal component (103) is on or off respectively.

9. The safety gear for cycling of claim 1 or 2, wherein the brake signal switch (101) is gyro sensor, and the brake signal component circuit (100) is configured that when the gyro sensor senses a continuous positive and then negative rate of angular change due to the head pitch movement within a period of time, all of the signal components are turned off.

10. The safety gear for cycling of claim 2, wherein the left turn signal component is a left turn signal lamp (1101, 1201), and the right turn signal component is a right turn signal lamp (1102, 1202).

11. The safety gear for cycling of claim 1 or 2, wherein the brake signal component (103) is a brake light lamp (1103, 1203).

12. The safety gear for cycling of claim 2, further comprising a turn signal alerting device to alert the cyclist when the left turn signal component or the right turn signal component is on, wherein the turn signal alerting device is a vibrator, a speaker or an alerting signal lamp.

13. The safety gear for cycling of claim 1 or 2, further comprising a brake signal alerting device to alert the cyclist when the brake signal component (103) is on, wherein the brake signal alerting device is a vibrator, a speaker or an alerting signal light.

14. The safety gear for cycling of claim 2, further comprising a controller circuit connected to the brake signal component circuit (100) and the turn signal component circuit (400), wherein the controller circuit is configured to control signal sequence, priority, time delay and turning all signal off among the left turn signal component, the right turn signal component, and the brake signal component (103).

## Patentansprüche

1. Ein Sicherheitsmechanismus für Fahrräder, der Folgendes umfasst:
Ein Bremssignalelement (103);
Einen Schaltkreis (100) für das Bremssignalelement;
wobei besagter Schaltkreis (100) für das Bremssignalelement an das Bremssignalelement (103) angeschlossen ist und einen Bremssignalschalter (101) umfasst, und
**gekennzeichnet dadurch, dass**
der Bremssignalschalter (101) eine Kopfneigungsbewegung eines Fahrradfahrers wahrnimmt, um das Einschalten und Abschalten des Bremssignallements (103) zu kontrollieren.

2. Der Sicherheitsmechanismus für Fahrräder gemäss Anspruch 1, der weiter Folgendes umfasst:
Ein Signalelement für ein Abbiegen nach links und ein Signalelement für ein Abbiegen nach rechsts;
Einen Schaltkreis des Signalelements für ein Abbiegen (400);
wobei besagter Schaltkreis des Signalelements für ein Abbiegen (400) an das Signalement für ein Abbiegen nach links und das Signalelement für ein Abbiegen nach rechts angeschlossen ist und mindestens einen Abbiegesignalschalter (401) umfasst, und
wobei der Abbiegesignalschalter (401) eine Kopfdrehbewegung des Fahrradfahrers wahrnimmt, um das Anschalten und Abschalten des Signalelements für Abbiegen nach linkts und des Signalelements für Abbiegen nach rechts kontrolliert.

3. Der Sicherheitsmechanismus für Fahrräder gemäss Anspruch 2, bei dem der Abbiegesignalschalter (401) ein Neigungssensor oder ein Schwerkraftsensor ist.

4. Der Sicherheitsmechanismus für Fahrräder gemäss Anspruch 2, bei dem der Abbiegesignalschalter (401) einen Neigungssensor einschliesst, und das Schaltelement (400) für das Abbiegesignal so ausgelegt ist, dass, wenn der Neigungssensor sich seitlich um ein Grad oder mehr mit Bezug auf die Schwerkraft neigt, der Schaltkreis des Signalelements für ein Abbiegen (400) abschaltet und das Signalelement für ein Abbiegen nach links oder das Signal für ein Abbiegen nach rechts angeschaltet ist.

5. Der Sicherheitsmechanismus für Fahrräder gemäss Anspruch 4, bei dem, wenn der Neigungsensor um 10° oder mehr um die Drehachse mit bezug auf die Schwerkraft oder auf ein entsprechendes Element durch Schwerkraft geneigt wird, das linke Signalelement angeschaltet ist, und wenn der Neigungssensor nach rechts um 10° oder mehr um die Drehachse mit bezug auf die Schwerkraft geneigt wird, das rechte Signalelement angeschaltet ist.

6. Der Sicherheitsmechanismus gemäss Anspruch 1 oder 2, bei dem der Bremssignalschalter (101) ein Neigungssensor, Gyrosensor oder ein Schwerkraftsendor ist.

7. Der Sicherheitsmechanismus für Fahrräder gemäss Anspruch 1 oder 2, bei dem der Bremssignalschalter (101) ein Neigungssensor ist, und der Schaltkreis des Bremssignalelements (100) so gestaltet ist, dass, wenn der Neigungssensor sich seitlich um eine Neigungsachse in gewissem Grad mit Bezug auf die Schwerkrafkt neigt, der Schaltkreis des Bremssignalelements (100) schliesst und das Bremssignalelement (103) angeschaltet ist.

8. Der Sicherheitsmechanismus für Fahrräder gemäss Anspruch 1 oder 2, bei dem der Bremssignalschalter (101) ein Gyrosensor ist, und der Schaltkreis des Bremssignalelements (100) so gestaltet ist, dass wenn der Gyrosensor eine gewisse Winkeländerung infolge der Kopfneigungsbewegung in einer positiven oder negativen Richtung feststellt, das Bremssignalelement (103) angeschaltet beziehungsweise abgeschaltet ist.

9. Der Sicherheitsmechanismus für Fahrräder gemäss Anspruch 1 oder 2, bei dem der Bremssignalschalter (101) ein Gyrosensor ist und der Schaltkreis des Bremssignalelements (100) so gestaltet ist, dass, wenn der Gyrosensor eine gewisse kontinuierlich positive und danach negative Winkeländerung infolge der Kopfneigungsbewegung innerhalb eines Zeitraumes feststellt, alle Signalelemente abgeschaltet werden.

10. Der Sicherheitsmechanismus für Fahrräder gemäss Anspruch 2, bei dem das Signalelement für Linksabbiegung eine Signalleuchte für eine Abbiegen nach links ist, und das Signalelement für Rechtsabbiegung eine Signalleuchte für ein Abbiegen nach rechts ist (1102, 1202).

11. Der Sicherheitsmechanismus für Fahrräder gemäss Anspruch 1 oder 2, bei dem das Bremssignalelement (103) ein Bremslicht ist (1103, 1203).

12. Der Sicherheitsmechanismus für Fahrräder gemäss Anspruch 2, der weiter eine Alarmvorrichtung für das Abbiegesignal umfasst, um den Fahrradfahrer zu warnen, wenn das Signalelement für das Abbiegen nach links oder das Signalelement für das Abbiegen nach rechts angeschaltet ist, wobei die Alarmvorrichtung für das Abbiegesignal ein Schwingungserzeuger, ein Lautsprecher oder eine Alarmsignalleuchte ist.

13. Der Sicherheitsmechanismus für Fahrräder gemäss Anspruch 1 oder 2, der weiter eine Alarmvorrichtung für das Bremssignal umfasst, um den Fahrradfahrer zu warnen, wenn das Bremssignalelement (103) angeschaltet ist, oder, bei dem die Alarmvorrichtung für das Bremssignal ein Schwingungserzeuger, ein Lautsprecher oder eine Alarmsignalleuchte ist.

14. Der Sicherheitsmechanismus für Fahrräder gemäss Anspruch 2, der weiter einen Kontrollschaltkreis umfasst, der an dem Schaltkreis des Bremssignalelements (100) angeschlossen ist und den Schaltkreis für das Abbiegesignalelement (400), Sicherheitsmechanismus, bei dem der Kontrollschaltkreis so ausgestaltet ist, dass er die Kontrollsignalfolge, die Priorität und die Laufzeit kontrolliert und alle Signale des Signalelements für das Abbiegen nach links, des Signalelements für das Abbiegen nach rechts und das Bremssignalelement (103) abschaltet.

## Revendications

1. Un équipement de sécurité pour cyclisme, comprenant :
un composant de signal de freinage (103) ;
un circuit pour composant de signal de freinage (100),
où ledit circuit pour composant de signal de freinage (100) est connecté au composant de signal de freinage (103), et il comprend un commutateur de signal de freinage (101), et ledit commutateur de signal de freinage (101) peut détecter un mouvement de tangage de la tête du cycliste pour contrôler la marche et l'arrêt du composant de signal de freinage (103).

2. L'équipement de sécurité pour cyclisme de la revendication 1, comprenant en outre :
un composant de signal de virage à gauche et un composant de signal de virage à droite :
un circuit pour composant de signal de virage (400),
où ledit circuit pour composant de signal de virage (400) est connecté au composant de signal de virage à gauche et au composant de signal de virage à droite, et il comprend au moins un commutateur de signal de virage (401), et
où le commutateur de signal de virage (401) peut détecter un mouvement de tangage de la tête du cycliste pour contrôler la marche et l'arrêt du composant de signal de virage à gauche et du composant de signal de virage à droite.

3. L'équipement de sécurité pour cyclisme de la revendication 2, où le commutateur de signal de virage (401) est un capteur d'inclinaison ou un capteur de gravité.

4. L'équipement de sécurité pour cyclisme de la revendication 2, où le commutateur de signal de virage (401) comprend un capteur d'inclinaison ; et le circuit pour composant de signal de virage (400) est configuré de telle manière que lorsque le capteur d'inclinaison est incliné vers un côté à un degré ou plus par rapport à la gravité, le composant de signal de virage (400) se ferme, et le composant de signal de virage à gauche ou le composant de signal de virage à droite s'active.

5. L'équipement de sécurité pour cyclisme de la revendication 4, où lorsque le capteur d'inclinaison est penché vers le côté gauche à 10° ou plus sur l'axe de rotation par rapport à la gravité ou un composant résultant par gravité, le composant de signal gauche est activé et lorsque le capteur d'inclinaison est penché vers le côté droit à 10° ou plus sur l'axe de rotation relatif à la gravité, le composant de signal droit est activé.

6. L'équipement de sécurité pour cyclisme des revendications 1 ou 2, où le commutateur de signal de freinage (101) est un capteur d'inclinaison, un capteur gyroscopique ou un capteur de gravité.

7. L'équipement de sécurité pour cyclisme des revendications 1 ou 2, où le commutateur de signal de freinage (101) est un capteur d'inclinaison, et le circuit pour composant de signal de virage (400) est configuré de telle manière que lorsque le capteur d'inclinaison est incliné vers un côté par rapport à l'axe de tangage à un degré relatif à la gravité, le circuit pour composant de signal de virage (400) est fermé et le composant de signal de freinage (103) est activé.

8. L'équipement de sécurité pour cyclisme des revendications 1 ou 2, où le commutateur de signal de freinage (101) est un capteur gyroscopique, et le circuit pour composant de signal de freinage (100) est configuré de telle manière que lorsque le capteur gyroscopique détecte un taux de variation angulaire en raison du mouvement de tangage de la tête dans une direction positive ou négative, le composant de signal de freinage (103) s'active ou désactive respectivement.

9. L'équipement de sécurité pour cyclisme des revendications 1 ou 2, où le commutateur de signal de freinage (101) est un capteur gyroscopique, et le circuit pour composant de signal de freinage (100) est configuré de telle manière que lorsque le capteur gyroscopique détecte un taux de variation angulaire continue positive et ensuite négative, en raison du mouvement de tangage de la tête pendant une certaine période de temps, tous les composants des signaux sont désactivés.

10. L'équipement de sécurité pour cyclisme de la revendication 2, où le composant de signal de virage à gauche est un signal lumineux de virage à gauche (1101, 1201), et le composant de signal de virage à droite est un signal lumineux de virage à droite (1102, 1202).

11. L'équipement de sécurité pour cyclisme des revendications 1 ou 2, où le composant de signal de freinage (103) est un signal lumineux de freinage (1103, 1203).

12. L'équipement de sécurité pour cyclisme de la revendication 2, comprenant en outre un dispositif d'alerte avec signal de virage pour alerter le cycliste lorsque le composant de signal de virage à gauche ou le composant de signal de virage à droite est activé, où le dispositif d'alerte avec signal de virage est un vibrateur, un haut-parleur ou un signal lumineux d'alerte.

13. L'équipement de sécurité pour cyclisme des revendications 1 ou 2, comprenant en outre un dispositif d'alerte avec signal de freinage pour alerter le cycliste lorsque le composant de signal de freinage (103) est activé, où le dispositif d'alerte avec signal de freinage est un vibrateur, un haut-parleur ou un signal lumineux d'alerte.

14. L'équipement de sécurité pour cyclisme de la revendication 2, comprenant en outre un circuit de contrôle connecté au circuit pour composant de signal de freinage (100) et au circuit pour composant de signal de virage (400), **caractérise en ce que** le circuit de contrôle est configuré de manière à contrôler la séquence de signaux, la priorité, la décélération et la désactivation de tous les signaux parmi le composant de signal de virage à gauche, le composant de signal de virage à droite et le composant de signal de freinage (103).
